# EUROPEAN PATENT SPECIFICATION

(11) **EP 0 604 850 B1**
(45) Date of publication and mention of the grant of the patent: **19.02.1997**
(21) Application number: 93120347.5
(22) Date of filing: 16.12.1993
(51) Int. Cl.: C08F 4/654, C08F 4/655, C08F 10/00

(54) **Novel olefin polymerizing catalyst, method for preparing it and use for the polymerization of olefins**
Neuer Katalysator für Olefinpolymerisation, Verfahren zu seiner Herstellung und Verwendung zur Polymerisation von Olefinen
Nouveau catalyseur de polymerisation d'oléfines, méthode pour sa préparation et son utilisation pour la polymérisation d'oléfines

(30) Priority: 22.12.1992 FI 925832
(43) Date of publication of application: 06.07.1994
(73) Proprietor: BOREALIS POLYMERS OY, SF-06101 Porvoo (FI)
(72) Inventor: Ala-Huikku, Sirpa, SF-00970 Helsinki (FI); Garoff, Thomas, SF-00840 Helsinki (FI); Johansson, Solveig, S-444 47 Stenungsund (SE); Palmqvist, Ulf, SF-06150 Porvoo (FI)
(74) Representative: Dost, Wolfgang, Dr.rer.nat., Dipl.-Chem.

(56) References cited:
- EP-A- 0 409 563
- EP-A- 0 428 375
- WO-A-91/08239

## Description

The invention relates to a method for preparing a procatalyst for polymerizing olefins in steps comprising chlorination of a particulate inert support with a chlorinating agent and contacting it with an impregnating solution based on a magnesium compound, a tetravalent titanium compound and an electron donor. The invention also relates to the procatalyst composition prepared with this method and to the use of this procatalyst composition for the polymerization of α-olefins.

α-olefins have conventionally been polymerized (i.e. homopolymerized and copolymerized) with the Ziegler-Natta catalyst system, which consists of a procatalyst and a cocatalyst. The procatalyst is based on a transition metal compound belonging to any of groups IVA-VIIA, VIII (Hubbard) of the periodic table of elements, and the cocatalyst is based on an organometallic compound of a metal belonging to any of groups I(A)-III(A) (Hubbard) of the periodic table of the elements. The catalyst system frequently comprises a solid procatalyst support and also electron donors which enhance and modify the catalytic properties of the system.

The catalytic activity of the procatalyst is markedly enhanced by supports such as magnesium halogenides, magnesium alkoxides, and magnesium oxides, titanium dioxide, aluminium dioxide and silicon dioxide. When aluminium oxide or silicon oxide are used, the support is usually pretreated thermically and/or chemically in order to remove at least part of its surface hydroxyl groups. After this, the pretreated solid support is often treated with one or more liquids containing a surface-modifying magnesium compound, an electron donor/-solvent, a titanium compound and a chlorinating agent.

Procatalysts of this type and methods for preparing them are disclosed, among others, by FI patent specifications 70417, 70418 and 78113, WO-A-91/08239 and WO-A-91/09881 EP patent specifications 117 929, 173 102, 173 471, 173 485, 173 488 and 185 581, and also by US patent specifications 4 855 271, 4 876 229, 4 883 111 and 4 888 318.

US patent specification 4 833 111 describes a method for preparing a procatalyst, in which calcinated silicon dioxide is treated with a hydrocarbon solution of dialkyl magnesium and subsequently with EtOH, then with TiCl₄ and finally with ethyl aluminium dichloride before the product is recovered.

US patent specification 4 855 271 presents a method for preparing a procatalyst by impregnating a calcinated aluminium oxide support with an alcohol solution (e.g. VI) of magnesium chloride and titanium alkoxide. The solid substance obtained after the evaporation of alcohol is treated with TiCl₄ and is recovered as a particularly active procatalyst.

EP patent application 173 471 describes the treatment of dehydrated silicon oxide in isopentane with a hexane solution of butyl ethyl magnesium and butanol. The mixture is subsequently submitted to a treatment using titanium tetrachloride, chlorine gas and trialkyl aluminium, before drying, in order to obtain the desired procatalyst. Since a separate trialkyl aluminium cocatalyst is added just before the polymerization, the trialkyl aluminium mentioned in connection with the preparation of the procatalyst does not serve as a cocatalyst.

WO-A-91/09881 presents a method for preparing a procatalyst by impregnating silicon dioxide, which has been dried at a temperature in the range of 120 to 800°C and dehydrated, with hexamethyl disilazane, an impregnating solution containing a pentane solution of triethyl aluminium, butanol, butyl octyl magnesium and heptane. The aluminium compound, the magnesium compound and the alcohol form together a bimetal compound by means of which the impregnation is carried out. The treatment with titanium tetrabutoxide is conducted either in the previous contact step or by including it in advance in the impregnating solution. After the drying step the composition is chlorinated with ethyl aluminium sesquichloride or ethyl aluminium dichloride to obtain the procatalyst.

Ziegler-Natta catalyst have often been used to prepare ethene homopolymers and copolymers. The focus has then been on homopolymers and copolymers with densities above 940 kg/m³ and melt flow rates (MFR_{2.16}) in the range of 1 to 30 which are apt for injection-moulding and have a good impact resistance, provided that they have a relatively narrow molar mass distribution.

Ethene homopolymers and copolymers having a broad molar mass distribution have been prepared either by using chromium catalysts or by conducting the polymerizations with Ziegler Natta catalysts in several steps, the conditions of each step being adjusted so as to produce ethene homopolymers and copolymers with different molecular weights. The polymer thus yielded has a molar mass distribution curve with a number of peaks, a two-peak, i.e. bimodal polyethene being the most frequent one.

The production conditions of an ethene homopolymer and/or copolymer having both a narrow and a broad molar mass distribution pose most specific demands on the optimal performance of the Ziegler-Natta catalyst. When material with a narrow molar mass distribution is prepared, or the first polymerization step of a material having a broad molar mass distribution is accomplished, considerable amounts of hydrogen are needed to control the molar mass. This entails reduced catalytic activity, given that hydrogen is catalytically bound to active centres during polymerization. If the catalyst has such a harmful hydrogen sensitivity, its activity will be lost to too large an extent during polymerization.

Ziegler-Natta catalysts of prior art also have the inconvenience that when polymerizable comonomer is used with ethene, the reactivity yielded by the catalyst may grow and the polymerization may proceed beyond control. For this reason, the procatalyst activity must be controlled not only in the absence of hydrogen but also in the presence of comonomer.

In the processes of prior art described above large amounts of polar liquids, difficult to remove, are generated in the support impregnating solution. Moreover, some processes use a chlorous tetravalent titanium compound which is sensitive to impurities and loses its catalytic activity even when activated.

EP-A 0 428 375 relates to a process for preparing a polyolefin by polymerizing or copolymerizing an olefin or olefins in the presence of a catalyst comprising a solid catalyst component and an organometallic compound, said solid catalyst component being prepared by the reaction of the following components [I] and [II]:
[I] a reaction product obtained by reacting the following components (1), (2) and (3) with one another:
   (1) a silicon oxide and/or an aluminium oxide;
   (2) a reaction product obtained by the reaction of a magnesium halide and compound represented by the general formula Me(OR)ₙX_{z-n} wherein Me represents an element of Groups I to IV in the Periodic Table, z represents the valence of the element Me, n is 0<n≤z, X is a halogen atom, and R is a hydrocarbon radical having 1 to 20 carbon atoms; and
   (3) a titanium compound represented by the general formula Ti(OR)ₙX₄₋ₙ wherein R is a hydrocarbon radical having 1 to 20 carbon atoms, X is a halogen atom, and n is 0≤n≤4, in the presence of a compound represented by the general formula ROH wherein R is hydrocarbon radical having 6 to 20 carbon atoms or an organic residue containing such an element as oxygen, nitrogen, sulfur, or chlorine; and
[II] an organoaluminium compound represented by the general formula AIRₙX₃₋ₙ wherein R is a hydrocarbon radical having 1 to 24 carbon atoms, X is a halogen atom, and n is 0<n<3.

EP-A-0 409 563 discloses a process for preparing a polyolefin by polymerizing an olefin or olefins in the presence of a catalyst comprising a solid catalyst component and an organometallic compound, the said solid catalyst component being prepared by reacting the following components [I] and [II] and then reacting the reaction product thus obtained with the following component [III]:
[I] a reaction product obtained by reacting:
   (1) a silicon oxide and/or an aluminum oxide, and
   (2) a titanium compound, or a titanium compound and a vanadium compound,
[II] a reaction product obtained by the reaction of:
   (1) a magnesium halide,
   (2) a compound represented by the general formula Me(OR)ₙX_{z-n} wherein Me represents an element of Groups I to IV in the Periodic Table, z represents the valence of the element Me, n is 0<n≤z, X is a halogen atom, and R is a hydrocarbon residue having 1 to 20 carbon atoms, and
   (3) a titanium compound, or a titanium compound and a vanadium compound; and
[III] an organoaluminum compound.

The purpose of the invention is to provide a catalyst for the polymerization of ethene that has an adequate activity especially in the presence of hydrogen and a controlled activity in the absence of hydrogen and/or in the presence of a comonomer. The catalyst according to the invention must also have sufficient activity at the very outset of the polymerization. The catalyst must also have favourable general properties, such as an adequate particle size and shape, a relatively narrow particle size distribution, a low amount of fines and a straightforward preparation process not involving environmetal hazards.

The objectives specified above have now been attained with a novel method for preparing a procatalyst composition for the polymerization of olefins, which is mainly characterized by the features defined in the characterizing part of claim 1. Thus, the inventors have realized that a procatalyst apt for polymerizing α-olefins and especially ethene with high activity and high hydrogen and comonomer sensitivity is provided by including the following consecutive steps in the process:
a) contacting a particulate inert support with a chlorinating agent,
b) impregnating the contacted particulate inert support with solution based on (i) a magnesium halide,
(ii) an alkoxy magnesium compound, (iii) a tetravalent titanium alkoxide and (iv) an electron donor. The product is after step b) optionally treated with additional electron donor after which the resulting procatalyst is dried. Such chlorination agent contacting and impregnation produce a perfect procatalyst, which together with an organometallic cocatalyst is very well suited for the preparation of an ethene polymer with a controlled molar mass.

In one embodiment the impregnation step b) can be followed by a second chlorinating step c) in which the chlorination agent contacted and impregnated particulate inert support is further chlorinated with a chlorinating agent. In still another embodiment two different impregnation solutions are added consecutively onto support as follows: i) first solution is made of a Mg halogen compound and titanium alkoxide compound, and optionally some electron donor, such as alcohol, ii) a second solution is made of a Mg alkoxide compound and a titanium alkoxide compound and some electron donor.

The particulate inert support used in the invention can in principle be any inorganic oxide or oxide mixture or an inorganic salt used as a catalyst support. Support agents based on silicon, aluminium, titanium and/or magnesium oxides are appropriate particulate inert supports. Silicon dioxide, aluminium oxide, aluminium silicate, magnesium oxide, or Mg salts with or without complexing agents, such as alcohols are appropriate supports. Silicon dioxide, aluminium oxide, aluminium silicate and magnesium silicate or a mixture of these or Mg chlorides, e.g. MgCl₂ as an ethanol complex, MgCl₂ x nEtOH, where n = 1-6, which can be prepared by e.g. spraying techniques are particularly advantageous. Silicon dioxide is the most preferred substance in this respect. The particle size of the appropriate support is in the range of 10 to 200 µm and preferably from 20 to 150 µm. The support is preferably selected so as to have a particle size distribution which is as narrow as possible. If a broader particle size distribution is desired for the finished polymer product, a support with a broader particle size distribution should consequently be selected.

The particulate inert support used in the method and procatalyst claimed must be dry. It is preferable to conserve the surface hydroxyls, but they can optionally be removed with heat and/or a chemical treatment.

As mentioned above, silicon dioxide, i.e. silica, is a preferred particulate inert support. At lower temperatures the thermal treatment of silica aims at water removal and at higher temperatures at surface hydroxyl removal by calcination. The heat treatment is preferably carried out at a temperature in the range of 100 to 1000°C. In one embodiment, silica is dried at a temperature of 100 to 250°C in order to remove water, which is physically adsorbed. After this, silica can be used either immediately for chlorination and impregnation as claimed, or surface hydroxyls can first be removed from the silica by calcinating at a temperature of 300 to 1000°C, followed by chlorination and impregnation of the silica which is now free from surface hydroxyls.

If one wishes to remove surface hydroxyls from the silica dioxide support by chemical means, it is reacted with substances that remove surface hydroxyls. Such compounds reacting with surface hydroxyls can be organic compounds of silicon, aluminium, zinc, phosphor and/or fluorine.

Among suitable organic silicon compounds removing hydroxyl groups we cite as preferable compounds the ones of formula (R₃Si)₂NR or of formula RₙSiX₄₋ₙ, in which R is hydrogen and/or an alkyl group, X is halogen and n is 1, 2 or 3. Compounds of formula [RₙAlX₃₋ₙ]ₘ are cited as preferred organic aluminium compounds, in which R is hydrogen and/or a hydrocarbon group containing 1-20 carbon atoms, preferably a lower alkyl group, X is halogen, n is 1, 2 or 3 and m is 1 or 2. Advantageous phosphor compounds consist of phosphor trihalogenides, phosphor oxytrihalogenides, dialkyl phosphor halogenides, monoalkyl phosphor halogenides and diamino phosphor oxyhalogenides. Suitable fluorine compounds are fluor gas, hydrogen fluoride, boron trifluoride, silicon tetrafluoride and sulphur oxide fluoride. The most preferable hydroxyl-removing substances are hexamethyl disilazane, triethyl aluminium, diethyl aluminium chloride, ethyl aluminium chloride and diethyl zinc.

Dried silica is typically reacted with an anti-hydroxyl compound in hydrocarbon slurry in order to convert the hydroxyls in silica into oxygen bridges between silica and the anti-hydroxyl agent, a non-reducing surface being preferably formed on the silicon dioxide support. Operations of the type described above are also suitable for the removal of surface hydroxyls from other inorganic oxides than silica.

The particulate inert support which has been dried according to the invention and preferably has surface hydroxyls or optionally is devoid of surface hydroxyls is first contacted with a chlorinating agent. Common chlorinating agents are chlorine or compounds thereof with an element belonging to any of groups III-V of the periodic table. Typical chlorinating agents are chlorine, hydrogen chloride, carbon tetrachloride, boron trichloride, ethyl aluminium dichloride, diethyl aluminium chloride, ethyl aluminium sesquichloride, silicon tetrachloride, phosphor trichloride, aluminium trichloride, and thionyl-chloride. The most preferable chlorinating agents are alkyl aluminium chlorides, [RₙAlCl₃₋ₙ]ₘ, where R is a C₁-C₂₀ hydrocarbon group, preferably a lower alkyl group, n is 1 or 2, m is 1 or 2. Ethyl aluminium dichloride (EADC) is a particularly advantageous chlorinating agent.

It is also advantageous if the aluminium used in the procatalyst preparation method has the form of the alkyl aluminium chloride and preferably ethyl aluminium dichloride used as the chlorinating agent mentioned above.

After the initial contacting step a) the particulate inert support is contacted with an impregnating solution based on two magnesium compounds, one titanium compound and an electron donor. The first one of the two magnesium compounds is one that contains halogen. In principle, it can be any magnesium compound containing halogen, such as hydrocarbon magnesium halogenide or alkoxy magnesium halogenide, provided that the other components contain halogen and alkoxide in an appropriate ratio. In one preferred embodiment the magnesium compound containing halogen is magnesium dihalogenide and particularly magnesium dichloride (MgCl₂). The magnesium dichloride should preferably be devoid of crystal water and dry.

An alkoxy magnesium compound is used as the second magnesium compound of the impregnating solution. In principle, it can be any alkoxy magnesium compound, such as alkyl magnesium alkoxide or alkoxy magnesium halogenide, provided that the other components of the impregnating solution contain alkoxy and halogen groups in view of adequate balance. In one preferred embodiment the alkoxy magnesium compound has the following formula (I)

Mg(OR¹)(OR²) (I)

where R¹ and R² are the same or different C₁-C₈ alkyl groups, preferably C₂-C₆ alkyl groups, or any mixture of such alkyl groups.

The method according to the invention yields an excellent result if magnesium dichloride (MgCl₂) is used as a magnesium halide compound and magnesium dialcoxide having 2-6 carbons in its alkyl group is used as the alkoxy magnesium compound. It is also preferable that substantially all of the magnesium used in the method is in the form of a magnesium halide compound and an alkoxy magnesium compound.

Since, during preparation of the impregnating solution, negative ligands such as halogens, alkoxides and electron donors settle freely around positive metal cores, the magnesium compounds concerned and also a titanium compound can be prepared in situ by using reactants of various types. An example of such a synthesis made in situ is a method in which dialkyl magnesium forms magnesium dialkoxide in situ when alcohol is used as an electron donor.

The predominant component of the impregnating solution is a titanium compound. In the invention, the titanium compound consists of a tetravalent titanium alkoxide. Such a compound may for instance be an alkoxy titanium halogenide having 1-3 alkoxy groups, or preferably a titanium tetraalkoxide of the following formula (II)

Ti(OR¹)₄ (II)

where R¹ is a C₁-C₈ alkyl group, preferably a C₂-C₆ alkyl group and most preferably an ethyl, propyl or butyl group. In some previous publications titanium tetra alkoxides have been used only as additives modifying the process (e.g. US patent specification 4 855 271), but this is certainly not their main purpose in the present invention. For this reason, it would be advantageous that substantially all of the titanium used in the method is in the form of a tetravalent titanium alkoxide.

The impregnating solution used in the method according to the invention also contains an electron donor. The electron donor may be any organic compound containing a heteroatom and donating electrons, but is preferably alcohol, ether or ester. Advantageous electron donors used in the method are C₁-C₁₀ alcohol or a mixture containing it, cyclic ether such as tetrahydrofuran or lower alkyl ester, such as ethyl acetate. Particularly advantageous electron donors are ethanol or butanol. As mentioned above, lower alcohols contain alkoxy groups that may react with the magnesium compound and the titanium compound, thus forming the active component in the impregnating solution in the reaction in situ.

The impregnating solution may contain only the active components above, but it is advantageous to include also a hydrocarbon solvent, preferably a C₄-C₁₀ hydrocarbon solvent. In terms of processability, it is advantageous that the particulate inert support is diluted only with small amounts of hydrocarbons in order to achieve good impregnation and consequently good morphology for the catalyst particles and narrow particle size distribution for the resulting polymer having not many fine particles (fines).

In one embodiment the impregnating solution is prepared by contacting and heating a magnesium halide compound, a magnesium alkoxide, a tetravalent titanium alkoxide, an electron donor and an optional hydrocarbon solvent. This operation yields a stable and clear solution having low viscosity and penetrating well into the surface pores of the particulate inert support during impregnation. The appropriate processing temperature is 50-100°C, preferably 70-80°C.

The invention relates principally to a support impregnating solution combination using a magnesium halide compound, an alkoxy magnesium compound, a titanium alkoxide and an electron donor. This implies that the component ratios may vary to a large extent within the scope of protection of the invention.

As mentioned above, the final composition of the impregnating solution before the actual impregnation can be reached in various ways by using reactants of different types and varying reactant ratios. In view of the invention it is preferable to opt for the following composition of the impregnating solution, which preferably is in the form of a reaction product such as a complex (III)

[MgX₂]ₐ[Mg(OR¹)(OR²)₂]_{b}[Ti(OR³)₄]_{c}[ED]_{d} III

where X is halogen,
R¹, R² and R³ are C₁-C₈ alkyl, preferably C₂-C₆ alkyl, same or different,
ED is an electron donor, and
a, b, c and d are numbers > 0 so that (a+b):c ≥ 1
and d:(a+b) < 4, preferably < 2

This is a preferred composition, advantageously used for processing a particulate inert support. According to another embodiment, some electron donor can be added to the support also after impregnation of the impregnation solution. The electron donor, preferably an ether, such as tetrahydrofuran, is added in the molar ratio ED:Ti ≤ 1.0. We have observed, that the addition of extra electron donor in small amounts improves the polymer morphology.

After impregnation, with or without additional electron donor, the procatalyst is dried to complete the impregnation. Intermediate drying steps can be included at any stage of the preparation of the catalyst. It is preferable to use only small amounts of hydrocarbons in order to achieve good morphology and consequently narrow particle size distribution for the polymer polymerized with this catalyst. In addition, using small amounts of diluents makes the preparation time of the catalyst very short even in industrial scale, and no heavy solvent recovery nor recycling is required.

The invention also relates to a novel procatalyst composition which is suitable for polymerizing ethene and other α-olefins and which is prepared with a method basically similar to the one described above. The procatalyst is particularly suitable for the polymerizing of ethene with high activity and high hydrogen and comonomer sensitivity. When single-step polymerization is implemented, the polymer attained has a narrow molar mass distribution (to measure the molar mass distribution the flow rate ratio FRR of the melt flow rates MFR is generally used, when these values are measured by using the weights 21.6 and 2.16 kg), and a morphology for various purposes of use.

The invention also relates to a method for homopolymerizing and copolymerizing ethene together with other α-olefins. In this case, the polymerization is conducted by using a procatalyst, which has been prepared basically in accordance with the process described above, together with an organometallic cocatalyst compound belonging to any of groups I(A)-III(A) (Hubbard) of the periodic table of elements. The cocatalyst compound is preferably an organometallic aluminium compound, such as triethyl aluminium, triisobutyl aluminium, trimethyl aluminium, dimethyl aluminium chloride and diethyl aluminium chloride or a mixture of these. The cocatalysts are introduced in the reactor either individually or as a premixture with the procatalytic composition above. Besides the procatalyst composition and the cocatalyst, external donors such as alkoxy silanes, ethers, esters and similar are usable. The procatalyst can also be treated by using any prepolymerization method known in the field.

As indicated above, one of the purposes of the invention is to produce α-olefin polymers and especially polyethene having a specific molar mass and molar mass distribution. In one embodiment, ethene is homopolymerized or copolymerized into an ethene homopolymer or copolymer having a narrow molar mass distribution. This molar mass distribution is attained if the polymerization is carried out in one step by using the procatalyst composition mentioned above.

According to another embodiment ethene is homopolymerized and/or copolymerized in several steps under varying conditions into an ethene homopolymer or copolymer having a controlled broad molar mass distribution. The procatalyst composition according to the invention is sensitive to hydrogen and has a controlled behaviour in the presence of a modifying comonomer, and is thus usable for polymerization that takes place in several steps, yielding a controlled, broad molar mass distribution, for instance bimodal polyethene. In this case, it is of course preferable to use hydrogen for controlling the molar mass and its distribution, and comonomer for controlling the molar mass, its distribution, density and melt flow rate. 0.1-20, preferably 1-10% by weight of another α-olefin is then advantageously used together with ethene.

In one embodiment, ethene is homopolymerized and/or copolymerized in two steps, the first one being carried out in the liquid phase by advantageously using hydrogen to control the molar mass and a loop reactor to enhance the yield, and the second step being conducted in the gas phase by advantageously using comonomer besides ethene in order to attain the desired ethene polymer product. A suitable process is disclosed in FI-906428. Other embodiments include processes having two or more loop reactors, or two or more gas-phase reactors in series.

A number of embodiment examples are presented below with the sole purpose to illustrate the present invention.

### Examples

### Preparation of the complex solution

### A) Preparation of the solution

[MgCl₂]_{0.5}[Mg(OPr)₂]_{0.5}[Ti(OBu)₄]_{1.0}[n-BuOH]_{1.5}

0.952 g (10 mmol) of magnesium chloride, 1.424 g (10 mmol) of magnesium propylate, 6.85 ml (20 mmol) of titanium tetrabutylate, 2.75 ml (30 mmol) of n-butanol and 2.5 ml of n-pentane were introduced in a septum bottle and the mixture was stirred at a temperature of 75°C over night in view of complete dissolution of solid magnesium compounds.

The solution yielded had a density of 0.9724 g/ml and a composition comprising 3.9% by weight of Mg, 7.9% by weight of Ti, 5.5% by weight of Cl.

### B) Preparation of the solution

[MgCl₂]_{0.48}[Mg(OPr)₂]_{0.52}[Ti(OBu)₄]_{1.0}[Cl₃CCH₂OH]_{3.42}

0.952 g (10 mmol) of magnesium chloride, 1.566 g (11 mmol) of magnesium propylate, 7.19 g (21mmol) of titanium tetrabutylate, 7.0 ml (71.92 mmol) of trichloroethanol and 5.25 ml of n-pentane were introduced in a septum bottle and the mixture was stirred at a temperature of 75°C over night in view of complete dissolution of solid magnesium compounds.

The solution yielded had a density of 1.1824 g/ml and a composition of 2.1% by weight of Mg, 4.4% by weight of Ti, 4.9% by weight of Cl.

### C) Preparation of the solution

[MgCl₂]_{0,48}[Mg(OPr)₂]_{0,52}[Ti(OBu)₄]_{1,0}[n-BuOH]_{3,14}

0.095 g (1 mmol) of magnesium dichloride, 0.150 g (1.1 mmol) of magnesium propylate, 0.71 ml (2.1 mmol) of titanium tetrabutylate, 0.33 ml (6.6 mmol) of n-butanol and 0.5 ml of n-pentane were introduced in a septum bottle and the mixture was stirred at a temperature of 75°C for 1.5 hours to completely dissolve solid magnesium compounds.

The solution attained had a composition containing 2.1% by weight of Mg, 5.7% by weight of Ti, 4.0% by weight of Cl.

### D) Preparation of the solution

[MgCl₂]_{0,2}[Mg(OPr)₂]_{1,8}[Ti(OBu)₄]_{1,0}[n-BuOH]_{1,2}

0.286 g (3 mmol) of magnesium dichloride, 3.847 g (27 mmol) of magnesium propylate, 5.14 ml (15 mmol) of titanium tetrabutylate, 1.65 ml (18 mmol) of n-butanol and 7.5 ml of n-pentane were introduced in a septum bottle and the mixture was stirred at a temperature of 75°C over night to completely dissolve solid magnesium compounds.

The solution obtained had a density of 0.901 g/ml and a composition of 5.0% by weight of Mg, 5.6% by weight of Ti and 14.0% by weight of Cl.

### Preparation of the procatalyst

### Example 1

2.0 g of silica (Crosfield, grade ES70X, dried at a temperature of 120°C) was slurried in 5.0 ml of n-pentane. 9.64 ml of a 10% by weight pentane solution of ethyl aluminium-dichloride (EADC) was added and the mixture was stirred at a temperature of 45°C for one hour. 1.2199 g of solution A) was added and the stirring was continued for three hours at a temperature of 45°C, and the procatalyst thus yielded was subsequently dried at a temperature of 45°C for 30 minutes.

The procatalyst composition contained 2.9% of Ti, 1.2% of Mg, 12.6% of Cl, 4.3% of Al.

### Example 2

2.0 g of silica (Crosfield, grade ES70X, dried at a temperature of 120°C) was slurried in 4 ml of n-pentane. 9.64 ml of a 10% by weight solution of ethyl aluminium chloride (EADC) was added and the mixture was stirred at a temperature of 45°C for one hour. 1.84 ml of solution B) was added and the stirring was continued for three hours at a temperature of 45°C, and after this the procatalyst thus attained was dried at a temperature of 45°C for 30 minutes.

The procatalyst composition contained 2.3% of Ti, 1.0% of Mg, 11.0% of Cl, 3.0% of Al.

### Example 3

2.0 g of silica (Crosfield, grade ES70X, calcinated at a temperature of 600°C) was slurried in 10 ml of n-pentane. 1.46 ml of a 20% by weight pentane suspension of ethyl aluminium chloride (EADC) was added and the solution was stirred at a temperature of 45°C for one hour. The entire solution C) was added and the stirring was continued for two hours at a temperature of 45°C. 3.285 ml of a 20% by weight pentane solution of EADC was added and the slurry was stirred for two hours at a temperature of 45°C. The procatalyst was subsequently dried at a temperature of 45°C for 45 minutes.

The catalyst composition was 2.4% of Ti, 1.2% of Mg, 11.5% of Cl, 4.1% of Al.

### Example 4

2.0 g of silica (Crosfield, grade ES70X, dried at a temperature of 120°C) was slurried in 5 ml of pentane. 14.65 ml of a 10% by weight pentane solution of ethyl aluminium dichloride (EADC) was added and the mixture was stirred at a temperature of 45°C for one hour. 1.9 ml of solution D) was added and the stirring was continued for three hours at a temperature of 45°C, and after this the procatalyst was dried at a temperature of 45°C for 30 minutes.

The catalyst composition was 2.3% of Ti, 2.0% of Mg, 15.8% of Cl, 5.6% of Al.

### Example 5

2.0 g of silica (Crosfield, grade ES70X, dried at a temperature of 120°C) was slurried in 7 ml of n-pentane. 6.56 ml of a 10% by weight pentane solution of ethyl aluminium dichloride (EADC) was added and the mixture was stirred at a temperature of 45°C for one hour. 1.9 ml of solution D) was added and the stirring was continued for three hours at a temperature of 45°C. After this, 8.0 ml of a 10% by weight solution of EADC was added to the slurry and was stirred for one hour at a temperature of 45°C, and the procatalyst was eventually dried for 30 minutes at a temperature of 45°C.

The catalyst composition was 2.0% of Ti, 2.0% of Mg, 14.9% of Cl, 5.1% of Al.

### Polymerization of ethene

1.8 litres of purified isobutane was fed into a 3 litre reactor. 100 mg of procatalyst and triethyl aluminium cocatalyst was introduced in the reactor so as to attain a molar ratio Al/Ti of 30. The mixture was heated to a temperature of 95°C and was maintained at that temperature during the entire polymerization. A 500 ml vessel was pressurized with hydrogen to a 7.2 bar pressure (abs.). Hydrogen and ethene were introduced in the reactor. The total pressure was raised to 28.5 bar (abs.) and was maintained by means of continuous ethene gas supply. The polymerization went on for one hour. The polymerization results are compiled in table 1.

### Preparation of procatalysts

### Example 6

4 g silica (Crosfield, grade ES70X, dried at a temperature of 120°C) was slurried in 10 ml n-pentane. 6.22 ml of a 20% by weight pentane solution of EADC was added and the slurry was stirred at a temperature of 45°C for one hour. The entire solution E) was added and the stirring was continued for 2 hours at a temperature of 45°C. 8.4 ml of a 20 % by weight n-pentane solution of EADC was added and the slurry was stirred for two hours at a temperature of 45°C. The procatalyst was subsequently dried at a temperature of 45°C for 30 minutes.

The procatalyst composition was 1.9% by weight of Ti, 1.9% by weight of Mg, 24.4% by weight of Cl and 5.7% by weight of Al.

### Example 7

4.0 g silica (Crosfield, grade ES70X dried at a temperature of 120°C) was slurried in 10 ml n-pentane. 6.22 ml of a 20% by weight pentane solution of EADC was added and the slurry was stirred at a temperature of 45°C for one hour. The entire solution F) was added and the stirring was continued for 2 hours at a temperature of 45°C. 8.0 ml of a 20% by weight n-pentane solution of EADC was added and 27.9 ml of 10 % by weight in n-pentane of EADC and the slurry was stirred for two hours at a temperature of 45°C. The procatalyst was subsequently dried at a temperature of 45°C for 30 minutes.

The procatalyst composition was 1.6% by weight of Ti, 2.3% by weight of Mg, 30.0% by weight of Cl and 7.5% by weight of Al.

### Example 8

1116 g of 25% by weight solution in n-pentane of EADC (2.64 mmol/g Si) was added to 832 g silica (Grace 955W, dried at a temperature of 200°C). The mixture was stirred at a temperature of 25°C at room temperature for one and a half hour. The entire solution G) was added and the mixture was stirred for 5 hours at room temperature. 36 g THF(0.6 mmol/g Si) was added and the mixture was stirred for 45 min at 35°C. The precursor was subsequently dried over night at 70°C.

The procatalyst composition was 1.6% by weight of Ti, 1.7% by weight of Mg, 11.1% by weight of Cl and 4.4% by weight of Al.

### Example 9

The entire solution H) was added to 4.55 g silica (Grace 955W dried at a temperature of 200°C). The mixture was stirred for 1 h at 45°C. 6.36 g 25% by weight in n-pentane of EADC (2.75 mmol/g Si) was added to the mixture. The procatalyst was dried for 1 h at 45°C and then for 1 h at 85°C.

The procatalyst composition was 1.2% by weight of Ti, 1.8% by weight of Mg, 12.4% by weight of Cl and 3.7% by weight of Al.

**Table 1**

| **Polymerization of ethene** | | | | | |
|---|---|---|---|---|---|
| **Example** | **Activity kg PE/g cat h** | **MFR (21.6)** | **MFR (21.6)** | **FRR (21/2)** | **BD kg/m**^{**3**} |
| 1 | 2.7 | 38.9 | 1.39 | 27.9 | 280 |
| 2 | 2.9 | 26.2 | 1.00 | 26.2 | 230 |
| 3 | 2.2 | 19.9 | 0.74 | 27.1 | 280 |
| 4 | 4.1 | 44.7 | 1.63 | 27.4 | 230 |
| 5 | 4.1 | 50.7 | 1.97 | 25.7 | 350 |
| 6 | 5.51 | 28 | 1.06 | 26.4 | 330 |
| 7 | 7.20 | 45.8 | 1.64 | 28.0 | 280 |
| 8 | 305 ppm Ash | 7.0 | | 20.8 (21/5) | 445 |
| 9 | 1.2 | 19.7 | 0.63 | 31.1 | 324 |

### Additional Polymerization technique

The catalyst in **example 9** was polymerized at low melt flow rate conditions, i.e. MFR₂ about 1. A 5 l reactor was purged with nitrogen at 90°C for 2 h. After this the reactor was cooled down to room temperature and 2.5 l of pentane was added. The pentane had been purified by TOB, 13X and Actal. After this about 100 mg of catalyst was introduced. Then the reactor temperature was raised in 10-15 min to 85°C. After this ethylene at a total pressure of 12 bar, hydrogen charged in a 500 ml container at a pressure of 6 bar and TEA (triethyl aluminium) as cocatalyst were added. The Al:Ti ratio was 60:1. The polymerization was carried out at 90°C for 90 min.

The polymerization in **example 8** was performed in bimodal mode in gas phase reactors. The conditions in the first gas phase reactor was; H₂/C₂ ratio 2.2, C₂ partial pressure was 3,0 bar, total pressure 17.5 bar. Reactor temperature was 100°C. The catalyst was injected in the first reactor. TEA was used as a cocatalyst. Al:Ti ratio was 45. The conditions in the second reactor were; H₂/C₂ ratio 0.04, C₂ partial pressure 7,0 bar. Total pressure was 17.5 bar, C₄/C₂ 0,12. Reactor temperature was 75°C.

### Preparation of Complex

### E) Preparation of the solution

[MgCl₂]_{1.5}[Mg(OPr)₂]_{0.5}[Ti(OBu)₄]_{1.0}[EtOH]_{4.0}

0.5713 g (6 mmol) magnesium dichloride, 0.285 g (2 mmol) magnesium propylate, 1.37 ml (4 mmol) titanium tetrabutylate and 0.95 ml (16 mmol) ethanol were introduced in a septum bottle and the mixture was stirred at a temperature of 80°C over night in view of complete dissolution of the solid magnesium compound. 3 ml n-pentane was added to the solution.

The solution attained had a composition containing 6.6 by weight of Mg, 6.5% by weight of Ti and 14.4% by weight of Cl.

### F) Preparation of the solution

[MgCl₂]_{2.0}[Mg(OPr)₂]_{1.0}[Ti(OBu)₄]_{1.0}[EtOH]_{7.5}

0.762 g (8 mmol) magnesium dichloride, 0.570 g (4 mmol) magnesium propylate, 1.37 ml (4 mmol) titanium tetrabutylate and 1.79 ml (30 mmol) ethanol were introduced in a septum bottle and the mixture was stirred at a temperature of 80°C over night in view of complete dissolution of the solid magnesium compound. 3 ml n-pentane was added to the solution.

The solution attained had a composition containing 4.9% by weight of Mg, 3.2% by weight of Ti and 9.5% by weight of Cl.

### G) Preparation of the solution

[MgCl₂]_{0.2}[Mg(OEt)₂]_{1.8}[Ti(OBu)₄]_{1.0}[OctOH]_{0.6}

9.51 g MgCl₂ (99.8 mmol) and 102.8 g Mg(OEt)₂ (898 mmol) were added to a solution of 39.0 g 1-octanol (300 mmol) and 700 g pentane. 169.0 g Ti(OBu)₄ (499 mmol) was then added to the slurry. The solution was stirred at room temperature at 40°C in 12 hours.

### H) Preparation of the solution

[MgCl₂]_{1.5}[Mg(OEt)_{1.5}][Ti(OBu)₄]_{1.0}[OctOH]_{5.0}

1.0 g MgCl₂ (10.5 mmol) and 1.2 g Mg(OEt)₂ (10.5 mmol) were added to a solution of 4.6 g 1-octanol (35 mmol) and 14 g n-pentane. 2.38 g Ti(OBu)₄ (7 mmol) was then added to the slurry. The mixture was stirred at 40°C for 12 hours. The solution was cooled down to room temperature.

## Claims

1. A method for preparing a procatalyst composition for the polymerization of olefins in steps comprising contacting of a particulate inorganic support with a chlorinating agent and further contacting it with an impregnating solution based on a magnesium compound, a tetravalent titanium compound and an electron donor, **characterized** in that it includes the following consecutive steps:
a) contacting the particulate inorganic support with a chlorinating agent,
b) impregnating the contacted particulate inorganic support with a solution based on (i) a magnesium halide, (ii) a magnesium alkoxy compound, (iii) a tetravalent titanium alkoxide compound and (iv) an electron donor.

2. A method according to claim 1, **characterized** in that it comprises a chlorinating step c), in which the contacted and impregnated support is contacted with a chlorinating agent.

3. A method according to claim 1 or 2, **characterized** in that the support is silica (SiO₂) and/or alumina (Al₂O₃) or a mixture containing essential amounts of these, preferably (SiO₂).

4. A method according to claim 1 or 2, **characterized** in that the support is a particulate complex of the formula MgCl₂·nC₂H₅OH, wherein n is 1 to 6.

5. A method according to any preceding claim, **characterized** in that the chlorinating agent is an alkyl aluminium chloride, preferably ethyl aluminium dichloride.

6. A method according to claim 5, **characterized** in that essentially all of the aluminium used in the method is in the form of alkyl aluminium chloride, preferably ethyl aluminium dichloride.

7. A method according to any of the preceding claims, **characterized** in that the magnesium halide is a magnesium dihalogenide, preferably magnesium dichloride (MgCl₂).

8. A method according to any of the preceding claims, **characterized** in that the alkoxy magnesium compound has the formula
Mg(OR¹)(OR²) (I)
where R¹ and R² are the same or different and are a C₁-C₈ alkyl group, preferably a C₂-C₆ alkyl group, or any mixture of such alkyl groups.

9. A method according to any of the preceding claims, **characterized** in that essentially all of the magnesium used in the method is in the form of a magnesium halide and an alkoxy magnesium compound.

10. A method according to any of the preceding claims, **characterized** in that the tetravalent titanium alkoxy compound has the following formula (II)
Ti(OR¹)₄ (II)
where R¹ is a C₁-C₈ alkyl group, preferably a C₂-C₆ alkyl group and most preferably an ethyl, propyl or butyl group.

11. A method according to any of the preceding claims, **characterized** in that essentially all of the titanium used in the method is in the form of a tetravalent titanium alkoxy compound.

12. A method according to any of the preceding claims, **characterized** in that the electron donor is an organic compound containing a heteroatom, preferably an alcohol, an ether or an ester, such as a C₁-C₅ alcohol, tetrahydrofuran or ethyl acetate.

13. A method according to any of the preceding claims, **characterized** in that the impregnating solution contains a hydrocarbon solvent, preferably a C₄-C₁₀ hydrocarbon solvent.

14. A method according to any of the preceding claims, **characterized** in that the impregnating solution is prepared by contacting and heating the magnesium halide compound, the alkoxy magnesium compound, the tetravalent titanium alkoxy compound, the electron donor and optionally the hydrocarbon solvent.

15. A method according to any of the preceding claims, **characterized** in that the impregnating solution is a solution (III) of the following reaction product, preferably a complex
[MgX₂]ₐ[Mg(OR¹)(OR²)]_{b}[Ti(OR³)₄]_{c}[ED]_{d} (III)
where X is halogen,
R¹, R² and R³ are the same or different and are
C₁-C₈ alkyl, preferably C₂-C₆ alkyl, ED is an electron donor, and
a, b, c and d are numbers > 0 such that
(a+b):c ≥ 1 and d:(a+b) < 4

16. A procatalyst composition for the polymerization of olefins, **characterized** in that it is prepared with a method that has been essentially presented in any of claims 1 to 13.

17. A method for homopolymerizing and copolymerizing ethene, **characterized** in that the homopolymerization or copolymerization is carried out by using a procatalyst according to claim 16 or prepared essentially with a method according to any of claims 1 to 15 together with an organometallic cocatalyst compound belonging to any of groups I(A)-III(A) of the periodic table of elements.

18. A method according to claim 17, **characterized** in that ethene is homopolymerized or copolymerized into an ethene homopolymer or copolymer having a narrow molar mass distribution.

19. A method according to claim 17, **characterized** in that ethene is homopolymerized or copolymerized in several steps under varying conditions into an ethene homopolymer or copolymer having a controlled broad molar mass distribution.

20. A method according to any of claims 17 to 19, **characterized** in that hydrogen is used to control the molar mass and its distribution.

21. A method according to any of claims 17 to 20, **characterized** in that 0.1-20, preferably 1-10% by weight of α-olefin is used as a comonomer with ethene to control the molar mass of the ethene homopolymer or copolymer, its distribution, density and melt flow rate.

22. A method according to any of claims 19 to 21, **characterized** in that ethene is homopolymerized and/or copolymerized in two steps, the first one being conducted in the liquid phase, preferably using hydrogen and a recycling reactor, and the second being carried out in the gas-phase, preferably using comonomer in addition to ethene.

## Patentansprüche

1. Verfahren zur Herstellung einer Prokatalysatorzusammensetzung für die Polymerisation von Olefinen in Stufen, die das Kontaktieren eines teilchenförmigen anorganischen Trägers mit einem Chlorierungsmittel und sodann das Kontaktieren des Trägers mit einer Imprägnierungslösung auf der Basis einer Magnesiumverbindung, einer vierwertigen Titanverbindung und eines Elektronendonators umfassen, dadurch gekennzeichnet, daß es die nachstehenden aufeinanderfolgenden Stufen umfaßt:
a) Kontaktieren des teilchenförmigen anorganischen Trägers mit einem Chlorierungsmittel,
b) Imprägnieren des kontaktierten teilchenförmigen anorganischen Trägers mit einer Lösung auf der Basis von (i) einem Magnesiumhalogenid, (ii) einer Magnesiumalkoxyverbindung, (iii) einer vierwertigen Titanalkoxidverbindung und (iv) einem Elektronendonator.

2. Verfahren nach Anspruch 1, dadurch gekennzeichnet, daß es eine Chlorierungsstufe c) umfaßt, bei der der kontaktierte und imprägnierte Träger mit einem Chlorierungsmittel kontaktiert wird.

3. Verfahren nach Anspruch 1 oder 2, dadurch gekennzeichnet, daß es sich beim Träger um Siliciumdioxid (SiO₂) und/oder Aluminiumoxid (Al₂O₃) oder um ein Gemisch mit wesentlichen Mengen dieser Bestandteile handelt, vorzugsweise um SiO₂.

4. Verfahren nach Anspruch 1 oder 2, dadurch gekennzeichnet, daß es sich beim Träger um einen teilchenförmigen Komplex der Formel MgCl₂·nC₂H₅OH, worin n einen Wert von 1 bis 6 hat, handelt.

5. Verfahren nach einem der vorstehenden Ansprüche, dadurch gekennzeichnet, daß es sich beim Chlorierungsmittel um ein Alkylaluminiumchlorid und vorzugsweise um Ethylaluminiumdichlorid handelt.

6. Verfahren nach Anspruch 5, dadurch gekennzeichnet, daß im wesentlichen das gesamte in dem Verfahren eingesetzte Aluminium in Form von Alkylaluminiumchlorid und vorzugsweise in Form von Ethylaluminiumdichlorid vorliegt.

7. Verfahren nach einem der vorstehenden Ansprüche, dadurch gekennzeichnet, daß es sich beim Magnesiumhalogenid um ein Magnesiumdihalogenid und vorzugsweise um Magnesiumdichlorid (MgCl₂) handelt.

8. Verfahren nach einem der vorstehenden Ansprüche, dadurch gekennzeichnet, daß die Alkoxymagnesiumverbindung die folgende Formel aufweist
Mg(OR¹) (OR²) (I)
worin R¹ und R² gleich oder verschieden sind und jeweils eine C₁-C₈-Alkylgruppe und vorzugsweise eine C₂-C₆-Alkylgruppe oder ein Gemisch von derartigen Alkylgruppen bedeuten.

9. Verfahren nach einem der vorstehenden Ansprüche, dadurch gekennzeichnet, daß im wesentlichen das gesamte bei dem Verfahren eingesetzte Magnesium in Form eines Magnesiumhalogenids und einer Alkoxymagnesiumverbindung vorliegt.

10. Verfahren nach einem der vorstehenden Ansprüche, dadurch gekennzeichnet, daß die vierwertige Titanalkoxyverbindung die folgende Formel (II) aufweist
Ti(OR¹)₄ (II)
worin R¹ eine C₁-C₈-Alkylgruppe, vorzugsweise eine C₂-C₆-Alkylgruppe und insbesondere eine Ethyl-, Propyl- oder Butylgruppe bedeutet.

11. Verfahren nach einem der vorstehenden Ansprüche, dadurch gekennzeichnet, daß im wesentlichen das gesamte in dem Verfahren eingesetzte Titan in Form einer vierwertigen Titanalkoxyverbindung vorliegt.

12. Verfahren nach einem der vorstehenden Ansprüche, dadurch gekennzeichnet, daß es sich beim Elektronendonator um eine ein Heteroatom enthaltende, organische Verbindung handelt, vorzugsweise um einen Alkohol, einen Ether oder einen Ester, wie einen C₁-C₅-Alkohol, Tetrahydrofuran oder Ethylacetat.

13. Verfahren nach einem der vorstehenden Ansprüche, dadurch gekennzeichnet, daß die Imprägnierungslösung ein Kohlenwasserstofflösungsmittel und vorzugsweise ein C₄-C₁₀-Kohlenwasserstofflösungsmittel enthält.

14. Verfahren nach einem der vorstehenden Ansprüche, dadurch gekennzeichnet, daß die Imprägnierungslösung durch Kontaktieren und Erwärmen der Magnesiumhalogenidverbindung, der Alkoxymagnesiumverbindung, der vierwertigen Titanalkoxyverbindung, des Elektronendonators und gegebenenfalls des Kohlenwasserstofflösungsmittels hergestellt wird.

15. Verfahren nach einem der vorstehenden Ansprüche, dadurch gekennzeichnet, daß es sich bei der Imprägnierungslösung um eine Lösung (III) des folgenden Reaktionsprodukts, vorzugsweise eines Komplexes,
[MgX₂]ₐ[Mg(OR¹)(OR²)]_{b}[Ti(OR³)₄]_{c}[ED]_{d} (III)
handelt, worin X Halogen bedeutet, R¹, R² und R³ gleich oder verschieden sind und C₁-C₈-Alkyl und vorzugsweise C₂-C₆-Alkyl bedeuten, ED einen Elektronendonator bedeutet und a, b, c und d solche Zahlen mit einem Wert >0 bedeuten, daß (a+b):c ≥1 und d:(a+b) <4.

16. Prokatalysatorzusammensetzung zur Polymerisation von Olefinen, dadurch gekennzeichnet, daß sie im wesentlichen nach einem Verfahren der Ansprüche 1 bis 13 hergestellt worden ist.

17. Verfahren zur Homopolymerisation und Copolymerisation von Ethen, dadurch gekennzeichnet, daß die Homopolymerisation oder Copolymerisation unter Verwendung eines Prokatalysators nach Anspruch 16 oder eines im wesentlichen nach einem der Verfahren der Ansprüche 1 bis 15 hergestellten Prokatalysators zusammen mit einer organometallischen Kokatalysatorverbindung, die zu einer der Gruppen I(A)-III(A) des Periodensystems der Elemente gehört, durchgeführt wird.

18. Verfahren nach Anspruch 17, dadurch gekennzeichnet, daß Ethen zu einem Ethen-Homopolymeren oder Copolymeren mit einer engen Molmassenverteilung homopolymerisiert oder copolymerisiert wird.

19. Verfahren nach Anspruch 17, dadurch gekennzeichnet, daß Ethen in mehreren Stufen unter variierenden Bedingungen zu einem Ethen-Homopolymeren oder -Copolymeren mit einer gesteuerten breiten Molmassenverteilung homopolymerisiert oder copolymerisiert wird.

20. Verfahren nach einem der Ansprüche 17 bis 19, dadurch gekennzeichnet, daß Wasserstoff zur Steuerung der Molmasse und deren Verteilung verwendet wird.

21. Verfahren nach einem der Ansprüche 17 bis 20, dadurch gekennzeichnet, daß 0,1-20 und vorzugsweise 1-10 Gew.-% eines α-Olefins als Comonomeres mit Ethen zur Steuerung der Molmasse des Ethen-Homopolymeren oder -Copolymeren, von dessen Verteilung, Dichte und Schmelzindex verwendet werden.

22. Verfahren nach einem der Ansprüche 19 bis 21, dadurch gekennzeichnet, daß Ethen in zwei Stufen homopolymerisiert und/oder copolymerisiert wird, wobei die erste Stufe in der flüssigen Phase und vorzugsweise unter Verwendung von Wasserstoff und eines Rückführreaktors durchgeführt wird und die zweite Stufe in der Gasphase und vorzugsweise unter Verwendung eines Comonomeren zusätzlich zu Ethen durchgeführt wird.

## Revendications

1. Procédé pour préparer une composition de procatalyseur, pour la polymérisation d'oléfines, par des étapes consistant à mettre en contact un support minéral particulaire avec un agent de chloration, puis à le mettre encore en contact avec une solution d'imprégnation à base d'un composé du magnésium, d'un composé du titane tétravalent et d'un donneur d'électrons, caractérisé en ce qu'il comprend les étapes successives consistant :
a) à mettre en contact le support minéral particulaire avec un agent de chloration ;
b) à imprégner le support minéral particulaire ainsi mis en contact, avec une solution à base (i) d'un halogénure de magnésium, (ii) d'un alcoxymagnésium, (iii) d'un alkylate de titane tétravalent et (iv) d'un donneur d'électrons.

2. Procédé selon la revendication 1, caractérisé en ce qu'il comprend une étape de chloration c), au cours de laquelle le support, mis en contact et imprégné, est mis en contact avec un agent de chloration.

3. Procédé selon la revendication 1 ou 2, caractérisé en ce que le support est constitué de silice (SiO₂) et/ou d'alumine (Al₂O₃) ou d'un mélange contenant des quantités essentielles de ces derniers, de préférence de (SiO₂).

4. Procédé selon la revendication 1 ou 2, caractérisé en ce que le support est un complexe particulaire de formule MgCl₂.nC₂H₅OH, où n vaut de 1 à 6.

5. Procédé selon l'une quelconque des revendications précédentes, caractérisé en ce que l'agent de chloration est un chlorure d'alkylaluminium, de préférence de dichlorure d'éthylaluminium.

6. Procédé selon la revendication 5, caractérisé en ce que la presque totalité de l'aluminium utilisé dans le procédé se présente sous forme de chlorure d'alkylaluminium, de préférence de dichlorure d'éthyl-aluminium.

7. Procédé selon l'une quelconque des revendications précédentes, caractérisé en ce que l'halogénure de magnésium est un dihalogénure de magnésium, de préférence le dichlorure de magnésium (MgCl₂).

8. Procédé selon l'une quelconque des revendications précédentes, caractérisé en ce que l'alcoxymagnésium a la formule :
Mg(OR¹)(OR²) (I)
dans laquelle R¹ et R² sont identiques ou différents et représentent des groupes alkyle en C₁ à C₈, de préférence des groupes alkyle en C₂ à C₆, ou tous mélanges de ces groupes alkyle.

9. Procédé selon l'une quelconque des revendications précédentes, caractérisé en ce que la presque totalité du magnésium utilisé dans le procédé se présente sous forme d'un halogénure de magnésium et d'un alcoxymagnésium.

10. Procédé selon l'une quelconque des revendications précédentes, caractérisé en ce que l'alcoxytitane tétravalent a la formule (II) ci-après :
Ti(OR¹)₄ (II)
dans laquelle R¹ est un groupe alkyle en C₁ à C₈, de préférence un groupe alkyle en C₂ à C₆ et tout spécialement un groupe éthyle, propyle ou butyle.

11. Procédé selon l'une quelconque des revendications précédentes, caractérisé en ce que la presque totalité du titane utilisé dans le procédé se présente sous forme d'un alcoxytitane tétravalent.

12. Procédé selon l'une quelconque des revendications précédentes, caractérisé en ce que le donneur d'électrons est un composé organique contenant un hétéro-atome, de préférence un alcool, un éther ou un ester, tel qu'un alcool en C₁ à C₅, le tétrahydrofuranne ou l'acétate d'éthyle.

13. Procédé selon l'une quelconque des revendications précédentes, caractérisé en ce que la solution d'imprégnation contient un solvant hydrocarboné, de préférence un solvant hydrocarboné en C₄ à C₁₀.

14. Procédé selon l'une quelconque des revendications précédentes, caractérisé en ce qu'on prépare la solution d'imprégnation en mettant en contact et en chauffant l'halogénure de magnésium, l'alcoxymagnésium, l'alcoxy-titane tétravalent, le donneur d'électrons et éventuellement le solvant hydrocarboné.

15. Procédé selon l'une quelconque des revendications précédentes, caractérisé en ce que la solution d'imprégnation est une solution (III) du produit de réaction suivant, de préférence un complexe :
[MgX₂]ₐ[Mg(OR¹)(OR²)]_{b}[Ti(OR³]₄]_{c}[ED]₄ (III)
où X est un halogène,
R¹, R² et R³ sont identiques ou différents et sont des groupes alkyle en C₁ à C₈, de préférence des groupes alkyle en C₂ à C₆,
ED est un donneur d'électrons, et
a, b, c et d sont des nombres > 0, tels que (a+b):C≥1 et d:(a+b)<4.

16. Composition de procatalyseur pour polymériser des oléfines, caractérisé en ce qu'on la prépare par un procédé qui a été essentiellement présenté dans l'une quelconque des revendications 1 à 3.

17. Procédé d'homopolymérisation et de copolymérisation de l'éthylène, caractérisé en ce que l'homopolymérisation ou la copolymérisation est mise en oeuvre par utilisation d'un procatalyseur selon la revendication 16, ou préparé essentiellement par un procédé selon l'une quelconque des revendications 1 à 15, avec un cocatalyseur organométallique appartenant à l'un quelconque des groupes I(A)-III(A) du Tableau Périodique des éléments.

18. Procédé selon la revendication 17, caractérisé en ce que l'éthylène est homopolymérisé ou copolymérisé en un homopolymère ou un copolymère de l'éthylène ayant une étroite distribution des masses molaires.

19. Procédé selon la revendication 17, caractérisé en ce que l'éthylène est homopolymérisé ou copolymérisé en un plusieurs étapes dans différentes conditions, pour donner un homopolymère ou un copolymère de l'éthylène ayant une distribution large et régulée des masses molaires.

20. Procédé selon l'une quelconque des revendications 17 à 19, caractérisé en ce qu'on utilise de l'hydrogène pour réguler la masse molaire et sa distribution.

21. Procédé selon l'une quelconque des revendications 17 à 20, caractérisé en ce qu'on utilise de 0,1 à 20, et de préférence de 1 à 10 % en poids d'une α-oléfine en tant que comonomère avec l'éthylène pour réguler la masse molaire de l'homopolymère ou du copolymère de l'éthylène, sa distribution, sa masse volumique et son indice de fluidité.

22. Procédé selon l'une quelconque des revendications 19 à 21, caractérisé en ce que l'éthylène est homopolymérisé et/ou copolymérisé en deux étapes, dont la première est mise en oeuvre en phase liquide, par utilisation de préférence d'hydrogène et d'un réacteur de recyclage, la deuxième étant mise en oeuvre en phase gazeuse, par utilisation de préférence d'un copolymère en plus de l'éthylène.
